# EUROPEAN PATENT APPLICATION

(11) **EP 2 796 860 A1**
(43) Date of publication of application: **29.10.2014**
(21) Application number: 12859216.9
(22) Date of filing: 17.12.2012
(51) Int. Cl.: G01N 21/88, H01L 31/042, G01N 21/35

(54) **METHOD FOR THE AUTOMATED INSPECTION OF PHOTOVOLTAIC SOLAR COLLECTORS INSTALLED IN PLANTS**

(30) Priority: 21.12.2011 ES 201132058
(71) Applicant: Abengoa Solar New Technologies, S.A., 41018 Sevilla (ES)
(72) Inventor: NORIEGA GIL, Pablo, E-41014 Sevilla (ES); VARGAS VILLANUEVA, Manuel, E-41029 Sevilla (ES); GARRIDO SATUE, Manuel, E-41029 Sevilla (ES); GONZALEZ VILLAGOMEZ, Jesús Maria, E-41029 Sevilla (ES)
(74) Representative: Carvajal y Urquijo, Isabel
(86) International application number: PCT/ES2012/070870
(87) International publication number: WO 2013/093153

(57) **Abstract**

Method for the automatized inspection of photovoltaic solar collectors installed in plants, wherein sets of collectors (1) are analyzed through image processing means. After a first treatment, the images captured are segmented to obtain the panels (2) forming said collectors (1) in a differentiated manner. Next, an analysis of the images of the panels (2) is carried out through image processing means, which may include geometric transformation and texture analyses. Next, the panels (2) can be divided into a main body (3) formed by a matrix of photovoltaic cells (4), arranged on the backsheet (5) and the periphery of the panel (6), which may be analyzed through image processing means to search for defects, identifying the type, number and severity of each one of those defects detected based on the irregularities observed.

## Description

### Technical field of the invention

The present invention belongs to the technical field of photovoltaic solar collectors for the production of electric energy by means of the use of solar energy, specifically, to the diagnosis of photovoltaic solar plants constituted by flat collectors placed on fixed structures or structures with tracking devices, and more specifically, to the automatized inspection of the panels of the plant itself, preferably in the visible spectrum, although the inspection can also be carried out in the infrared spectrum, or a combination of both. As a result of said inspection, all possible defects existing in the solar collectors under analysis must be apparent, whenever said defects manifest in the visible spectrum, or in the infrared spectrum if an inspection for said spectrum range is being carried out.

### Background of the invention

There are different methods for the diagnosis of photovoltaic solar collectors installed in plants nowadays, among which we have the following:
Laboratory analysis of a representative sample of the panels of the plant. This method can only be applied to a small sample of modules, but applying this method to all of the modules of a plant is unsustainable in economic terms. Even though some of the techniques used in this type of diagnosis contemplate digital image treatment strategies, the measurement conditions and the results obtained are completely different to the results obtained in the present invention, from the point of view of the acquisition of the image, its resolution, its size and the analysis itself.

The measurement of the electric characteristics of a representative sample of modules by means of a V-I tracer. The preventive maintenance of the panels is not guaranteed with the process, because it does not identify the defects in the modules that could cause power losses in the future, even if they are not causing them at the moment.

Inspection in the infrared spectrum with thermographic cameras. This method consists of the detection of hot zones based on temperature gradients.

Direct inspection of the panels by an operative. This procedure facilitates both the corrective and the preventive maintenance of the plants. In contrast, this process requires human intervention in its entirety, is subjective, and requires a vast amount of time for the detailed inspection of an entire plant. The present invention consists of the automation and improvement of said process in such a way that the diagnosis of complete plants can be carried out by means of the acquisition and treatment of high-resolution images. There are no solutions in the state of the art focusing on this line. Therefore, a method for the inspection of photovoltaic plants in an automatized and improved manner was desirable to prevent the existing inconveniences in the prior procedures of the state of the art.

### Description of the invention

The present invention solves the existing problems in the state of the art by means of a method for the automatized inspection of photovoltaic solar collectors installed in plants, based on the procurement of images of said collectors and in the treatment and analysis of said images through digital image processing means. This method presents a set of steps, which are described below.

First, the conditions and parameters for taking the images are set, and the means to obtain said images of the photovoltaic solar collectors to be inspected are configured. These conditions can be the following: spectrum range, illumination conditions, orientation, resolution, optics, optical filters, relative position and orientation between the collector and the camera, number of cameras used, number of images taken by collector and panel and any combination thereof. Depending on what is more advantageous for each specific step of the image processing, they can be treated in color directly or be converted temporarily to a grey scale. In addition, specifically, the established spectrum range can cover a part of the infrared spectrum, in order to obtain thermographic images of the collector.

Next, images are obtained of the photovoltaic solar collectors to be inspected by means of at least one camera, although several may be used, so each image comprises at least part of a collector.

The image obtained can be a panoramic image of the entire collector, obtained by means of a camera coupled to a panoramic capture device.

Alternatively, if the camera is not coupled to said panoramic capture device and does not provide images of the entire collector, but only partial images thereof, said partial images can be treated directly, or an image covering the entire collector may be obtained by means of the composition of a mosaic whose pieces are said partial images.

Subsequently, an analysis of the images of the collectors obtained through digital image processing means is carried out. In this analysis, the collector to be inspected is located in the image by separating it from the other elements, such as the background, the sky, and even other collectors in the image.

Then, a segmentation of the image of the collector, gathering each one of the panels making it up in a differential manner is carried out, and with the help of the digital image processing means, an individualized analysis of each panel is carried out.

Specifically, the localization and segmentation process of the collector consists of the following sub-steps: first, the binarization of the image is carried out with a single threshold obtained from an internal region of the first plane of said image, which consists of a matrix of panels framed in the starter image. Said region represents the light and dark tones of the interior the collector. Alternatively, the binarization could be carried out in an adaptive manner, wherein there is no single threshold, but depends on each region of the image. Next, the small discontinuities inside the panels due to, among others, the busbars and fingers of the cells, are eliminated, and the image is labeled in order to truly separate each region of the image that is not connected to another as an individual region. This allows differentiating each panel from the others in order to treat it individually as part of a previously defined matrix of panels. Then, the holes corresponding to the backsheet of each one of the panels are filled out, providing a compaction of the interior of said panels, and a new labeling and filtering process takes place, which eliminates all regions that do not correspond to the expected appearance of the panels according to area, rectangularity and other criteria.

According to a preferred embodiment of the invention, after the segmentation of the image of the collector in differentiated panels, a final segmentation of the panels can be carried out, which also comprises an additional binarization in each one of the differentiated panels obtained after the first segmentation, with a threshold obtained from an internal region of the panel representing the light and dark tones of the interior of the specific panel. Likewise, as was the case with the first binarization, alternatively, this additional binarization can be carried out in an adaptive manner, wherein there is no single threshold, but it would depend, in turn, on each small region inside the panel. After this additional binarization, the discontinuities of the interior of the panel are eliminated, and the holes existing therein are filled, in order to finally carry out a new filtering process according to area, rectangularity, and other criteria.

Once the segmentation to obtain the panels has been carried out, an analysis of the images of the panels through the image processing means is carried out.

Prior to this analysis, a rotation, scaling and perspective correction for each panel image is carried out by means of geometric transformation to put these images in the same arrangement as the standard images with which they will be compared, to detect the possible defects. Defects refer to any irregularity or anomaly in the panels that is visually observable, or in the infrared spectrum, such as imperfections, fissures in the glass, irregularities in the texture, burns, yellowing, etc.

Specifically, in this rotation, scaling and perspective correction of each panel image, a segmentation of the contour of the panel is carried out in four segments, which form a trapezoid corresponding to the main body of the panel. Then, a homography transformation on the vertexes of the trapezoid and all of its points is carried out, which comprises rotation, translation and scaling, and turns said trapezoid into a rectangle aligned with the axis of the image and makes it comparable to the standard images.

Next, the processing means carry out a large-scale analysis of the texture of the panel, using texture descriptors combined with a learning-based classifier.

Afterwards, each one of the panels is divided or segmented into two differentiated parts: the main body, having a regular geometry in the shape of a matrix of photovoltaic cells arranged on the backsheet, and the periphery of the panel, comprising the peripheral interconnectors, arranged in the upper and lower strips of the panel, and the peripheral backsheet, although there may be embodiments of panels that do not present said peripheral interconnectors.

In the next step, the processing means analyze the main body of the panel by dividing or segmenting said main body in each one of the photovoltaic cells that make it up, and carry out an individualized visual analysis of each one of them to detect possible irregularities. According to a specific embodiment of the invention, for this segmentation, the exact location of the cells in the panel is carried out by means of template matching, wherein an algorithm locates objects in an image that are similar to a template image of the cell, which is used as a model. Preferably, prior to the individualized analysis of each one of the photovoltaic cells, the image of said cell is smoothed by means of averaging in the vicinity of each pixel making the image up, so the appearance of the cell is as uniform as possible.

Preferably, during this visual analysis, an analysis of the texture of the cell and the appearance of the fingers and busbars of said cells is carried out. According to a preferred embodiment of the invention, this individualized analysis of each one of the photovoltaic cells is carried out, in the first place, by means of a variation model, which intends to make the most relevant defects apparent. An average image and a tolerance image are used in this variation model. The average image consists in the average at the level of each pixel of the prototype images used in preliminary training that are considered correct. The tolerance image indicates, for each pixel, the deviation regarding the average image admitted for the degree of intensity of each pixel. The cells to be analyzed are compared to these images, and the differences in intensity regarding the images, which indicate irregularities, are marked on these cells.

Secondly, the search for irregularities in the texture of the cell is supplemented with a procedure based on dynamic thresholding, whose objective is to make the less observable or fainter defects apparent.

In addition, a color analysis of the cell and backsheet is carried out to detect possible burns or yellowing in the panel.

Lastly, a visual analysis of the peripheral interconnectors is carried out, if they exist, and a color analysis of the peripheral backsheet to detect burns in these areas.

Therefore, this method achieves an automatized inspection of the panels that improves the state of the art because it does not require the dismounting thereof and eliminates subjectivity and is more precise than a visual inspection.

### Description of the figures

Next, in order to facilitate the comprehension of the invention, in an illustrative rather than limitative manner, an embodiment of the invention referring to a series of figures will be described.

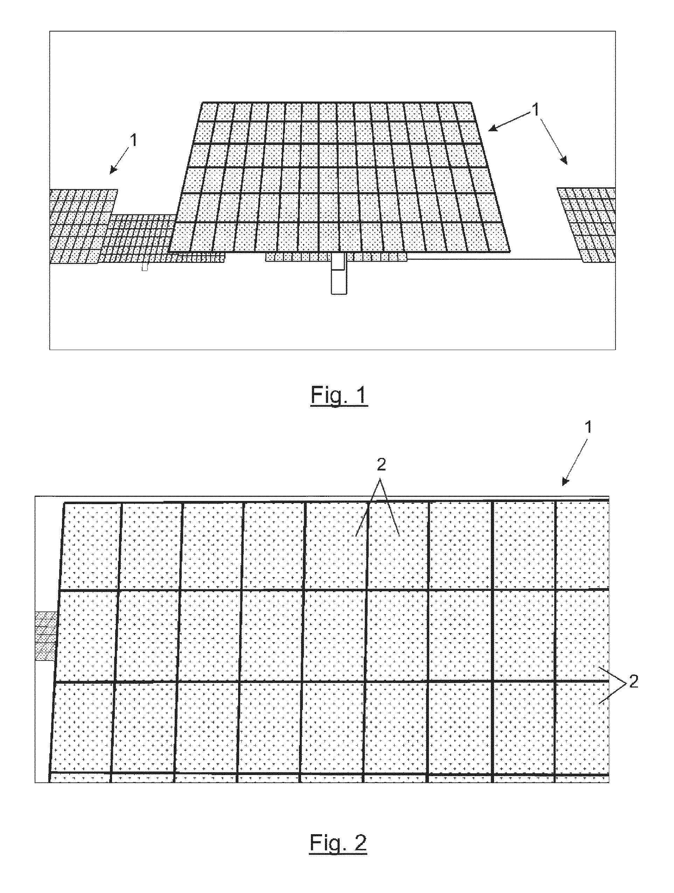

Figure 1 is a perspective view showing a field of solar collectors to which the method of the present invention applies.
Figure 2 shows the image of a collector on which a segmentation is to be carried out, to show each one of the panels making it up in a differentiated manner through image processing means.

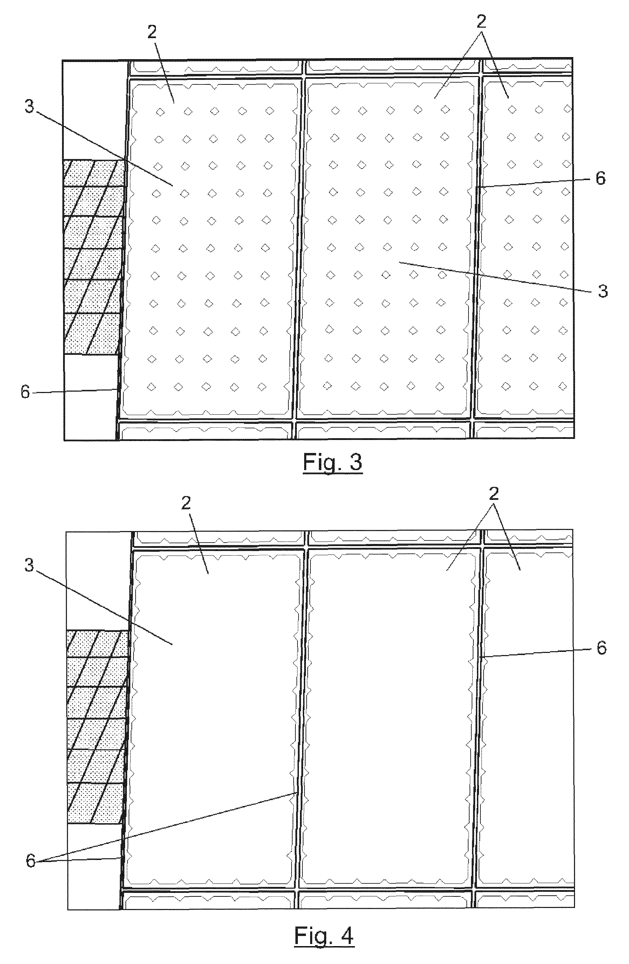

Figure 3 is an image of panels of the collector from the previous figure in the process of segmentation, wherein the labeling of the image has been carried out.
Figure 4 is an image of the panels from the previous figure wherein a filling and filtering process has been carried out according to area, rectangularity and other criteria. In this image, the vertexes of the different trapezoids delimit the main body of each one of the panels.

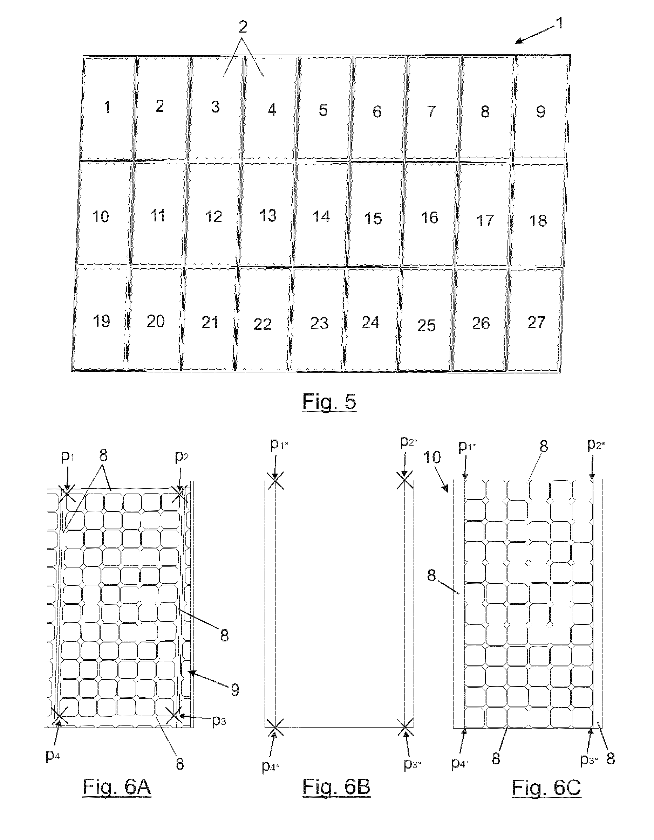

Figure 5 is similar to the previous figure, showing the image of the panels of the collector, which have already been segmented and numbered.
Figure 6a shows an image of the contour of a segmented panel according to the vertexes of a trapezoid delimiting the main body of the panel. Figure 6b shows a new position of the vertexes of the trapezoid of figure 6a after a homography transformation including rotation, translation and scaling. Figure 6c shows the image of the rectangle generated from the homography transformation of the trapezoid of the panel in figure 6a.

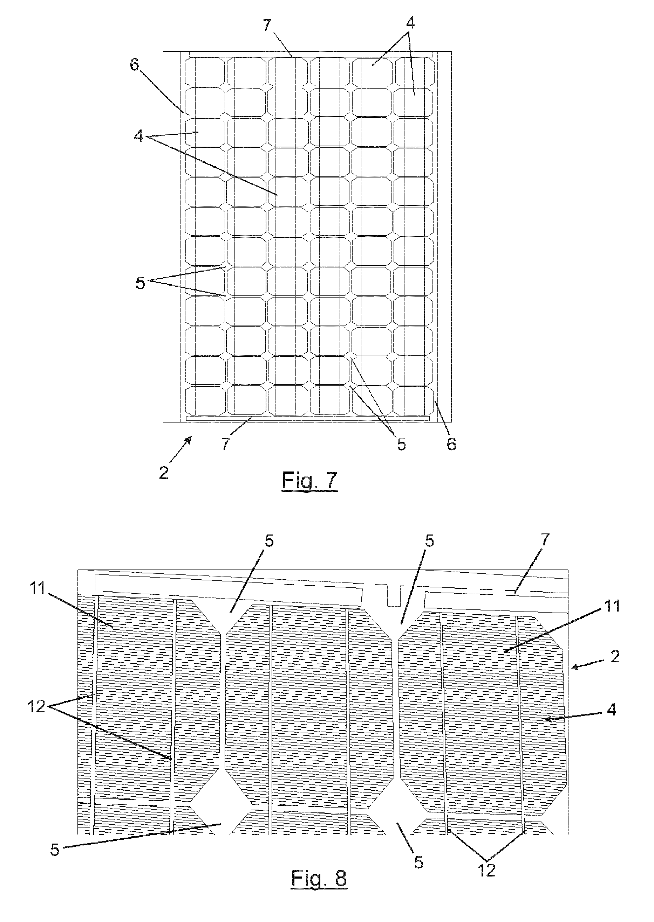

Figure 7 shows the image of a panel showing all of its components.
Figure 8 shows the detailed image of a set of photovoltaic cells of the panel after segmentation.

These figures refer to a series of elements, which are the following:
1. Photovoltaic solar collector
2. Panels of the photovoltaic solar collector
3. Main body of the panel
4. Photovoltaic cells of the panel
5. Backsheet of the panel
6. Periphery of the panel
7. Peripheral interconnectors of the panel
8. Segments obtained after the segmentation of the contour of the panel
9. Trapezoid formed by the segments obtained after the segmentation of the contour of the panel
10. Rectangle obtained from the homography transformation of the trapezoid
11. Fingers of the cells
12. Busbars of the cells
p₁, p₂, p₃, p₄ vertexes of the trapezoid obtained from the segments delimiting the main body of the panel.
p_{1*}, p_{2*}, p_{3*} y p_{4*} vertexes of the rectangle obtained after the homography transformation of the vertexes p₁, p₂, p₃, p₄ of the trapezoid.

### Description of a preferred embodiment of the invention

The object of the present invention is a method for the automatized inspection of photovoltaic solar collectors installed in plants.

The method consists of several steps, and ranges from the procurement of the images to be analyzed until the results on the status of the collectors are obtained.

The first step is that of establishing the measurement conditions and parameters for taking the images of the photovoltaic solar collectors 1 that are to be inspected, and the configuration of the means necessary to obtain the same. Specifically, the conditions to be established for the capture of images can be selected among the range of the electromagnetic spectrum, illumination, orientation, resolution, optics, optical filters, relative arrangement between the collector 1 and the camera, number of cameras used, number of images taken per collector 1 and panel 2, and a combination thereof.

Regarding the color space, depending on what is most advantageous for each specific step of the image processing, these can be treated in color directly or be converted temporarily to a grey scale. In addition, as a specific case in the establishment of conditions, the range of the far infrared electromagnetic spectrum can be taken and thermographic images will be obtained, which will provide information about the temperatures of certain areas of the panel and will help identify certain irregularities and defects for correction purposes, but not at a preventive level.

Next, in the second step, the images of the photovoltaic solar collectors 1 are obtained by means of at least one camera, in which each image comprises at least part of a collector 1. Although, in general terms, the images will be taken manually, a single camera coupled to a panoramic capture device can be used specifically, or more than one camera taking several simultaneous images, each one of which may take the image of a part of the collector.

The third step carries out an analysis of the images that have been taken from the collectors 1, through image processing means. Several actions are carried out in this step.

First, the collector 1 to be inspected is located in the image.

Then, a segmentation of the image of the collector 1 is carried out in order for the image to show each one of the panels 2 making the collector 1 in a clear and differentiated manner.

According to a preferred embodiment of the method object of the present invention, in order to obtain the location in the image of the collector 1 to be inspected and the segmentation of the image thereof, a first binarization of the image is carried out with a single threshold obtained from an internal region of the matrix of panels 2 representing the light and dark tones of the interior of the collector 1. However, this first binarization could be carried out in an adaptive manner, wherein there is no single threshold, but depends on each region of the image. Alternatively, for the segmentation of the image of collector 1, color may be used by means of a compound threshold, or from a region of the color space.

Specifically, in order to calculate the optimal threshold for the binarization of the central region of the image, the histogram of the region selected is analyzed, in which two dominant peaks are expected: the first one, located in the range of low intensities and associated to the main body of the panels 2, will be much more voluminous than the other one, centered in the area of high intensities and associated to the peripheral area of the modules (backsheet and framework thereof). Based on these two peaks, the optimal threshold is determined by seeking the level of gray corresponding to the minimum within the range of intensities delimited by the maximum low intensity peak and by the value resulting from the average between the two maximum peaks. A first binarization of the complete image is carried out with this threshold, obtaining a first segmentation of the matrix of panels 2. However, with this first segmentation, regions that are part of the background or even some regions of visible sky or the periphery of panel 2 could be considered as potential panels.

Next, small discontinuities existing in the interior of the panels 2 caused by the busbars 12 of the cells 4 are eliminated, and the image is labeled, with which each region of the image that is not connected to any other region is truly separated as an individual region, allowing to differentiate each panel 2 from the others and to treat it individually. Then, the holes corresponding to the backsheet 5 of the panels 2 are filled, which provides a compaction of the interior of said panels 2, carrying out a new labeling and filtering process that eliminates all the regions that do not correspond to the expected appearance of the panels 2 mainly according to area, rectangularity and other criteria.

As an option to improve the quality of the image analysis even more, after the initial segmentation of the image of the collector 1 into differentiated panels 2, a final segmentation of each one of the panels 2 can be preferably carried out.

An additional binarization of each one of the panels 2 is carried out during this final segmentation, with a threshold obtained from an enlarged region of the region labeled during the previous segmentation process, assuming that said enlarged region will contain the panel 2 in its entirety, and will therefore represent the light and dark tones of said panel 2. Next, a new elimination of the discontinuities of the interior of panel 2 is carried out. Alternatively, as was the case of the first binarization, this additional binarization could be carried out in an adaptive manner, wherein there is no single threshold, but it depends on each region inside the specific panel. Subsequently, the holes still existing in panel 2 are filled and a new filtering process is carried out according to area, rectangularity and other criteria.

As indicated above, the image obtained may be a panoramic image of the collector in its entirety, obtained through a camera coupled to a panoramic capture device.

Alternatively, if the camera is not coupled to said panoramic capture device, or in general, if the process is not based on an image of the collector in its entirety, but on partial images thereof, said partial images can be treated directly, or a panoramic image covering the entire collector could be obtained based on said partial images by means of the composition of a mosaic whose pieces are said partial images.

Next, in the fourth step, the segmented images of the panels 2 are analyzed through image processing means. A rotation, scaling and perspective correction is first carried out for each panel image 2 by means of geometric transformations to place these images in the same arrangement as the standard images of the panels with which they will be compared to detect possible irregularities.

Specifically, the rotation, scaling and perspective correction of the panel image 2 is carried out by means of a segmentation of the contour of the panel 2 in four segments 8, which form a trapezoid 9 with vertexes p₁, p₂, p₃ and p₄, corresponding to the main body of the panel 2. Then, a homography transformation is carried out for the vertexes p₁, p₂, p₃ and p₄ of the trapezoid 9 and all its points, which comprises rotation, translation and scaling, and turns said trapezoid 9 into a rectangle 10 with vertexes p_{1*}, p_{2*}, p_{3*} and p_{4*}, aligned with the axes of the image. This way, the images obtained are comparable to the standard panel images.

After this transformation, a large-scale texture analysis of the panel 2 is carried out to detect possible irregularities and defects.

After the large-scale texture analysis, each one of the panels 2 is segmented or divided into its main areas to carry out the detailed analysis of said areas. Said areas are the main body 3, in the central area of the panel 2, with a regular geometry in the shape of a matrix of identical photovoltaic cells 4 arranged on the backsheet 5 and the periphery of the panel 6, formed by the peripheral interconnectors 7, arranged on the upper and lower strips of the panel 2, and the peripheral backsheet 5, although according to different embodiments of the invention, panels lacking the peripheral interconnectors 7 may be treated.

In the fifth step, in order to carry out the analysis of the main body 3 through the image processing means, said main body 3 is first divided or segmented into each one of the photovoltaic cells 4 making it up. Next, an individualized analysis is carried out for each one of the photovoltaic cells 4, by means of the observation of irregularities in the image, and by means of a color study of the cell 4 and the backsheet 5, with the purpose of detecting possible imperfections corresponding to burns or other defects supposing the alteration of the texture or color.

According to a specific embodiment, in order to divide the main body into each one of the photovoltaic cells 4, the exact location of said cells 4 is carried out by means of template matching, which is an algorithm that, being provided with a cell prototype, uses said prototype as a template to be located in the entire area of the body of the module, using an appearance similarity criterion.

In addition, preferably, prior to the individualized analysis of each one of the photovoltaic cells 4, an image smoothing process of each cell 4 is carried out by means of averaging in the vicinity of each pixel forming the image, so the appearance of the cell 4 is as uniform as possible.

In particular, in order to carry out the individualized analysis of the photovoltaic cells 4, a detailed analysis is carried out for the texture of said cell 4 and for the appearance of the fingers 11 and busbars 12 thereof. Specifically, this individualized analysis of each one of the photovoltaic cells 4 is carried out in turn by means of a variation model, which uses an average image of prototype images considered correct and a tolerance image of the deviation permitted regarding this average image, with which the cells 4 are compared. This way, the differences in intensity regarding the images are marked in the cells 4, said differences in intensity corresponding to irregularities in said cells.

According to a preferred embodiment of the invention, after the analysis of the cells 4 through the variation model, in order to obtain a more detailed detection of possible irregularities, a dynamic thresholding process is carried out, wherein each one of the pixels of the image 4 is compared to the average or median of a neighboring environment thereof, and if the difference in intensity is higher than a pre-established value, it is considered irregular. The busbars 12 and the spaces between cells 4, which belong to the backsheet, are excluded from this dynamic thresholding model precisely so the model itself does not consider them irregularities. In addition, a color analysis of the cell 4 and the backsheet 5 is carried out for the detection of possible burns, paper yellowing and other defects. In addition, a visual analysis of the peripheral interconnectors 7, if the panel presents said interconnectors, and a color analysis of the peripheral backsheet 5 are carried out, in order to likewise detect irregularities corresponding to burns or yellowing.

After identifying the type, number and severity of each one of the defects detected, the information necessary to carry out the pertinent preventive or corrective actions will be available.

After describing the invention in a clear manner, it should be noted that the specific embodiments described above are susceptible to be modified in detail, as long as the main principle and the essence of the invention remain unaltered.

## Claims

1. Method for the automatized inspection of photovoltaic solar collectors installed in plants, which comprises the following steps:
- setting the capture conditions and parameters, and the means to obtain the images of the photovoltaic solar collectors (1) to be inspected,
- obtaining the images of the photovoltaic solar collectors (1) to be inspected by means of at least one camera, wherein each image comprises at least part of a collector (1),
- automatized analysis of the images of the collectors (1) obtained through image processing means, which comprises, in turn, the following sub-steps
- location in the image of the collector (1) to be inspected,
- and segmentation of the image of the collector (1), obtaining each one of the panels (2) making up said collector (1) in a differentiated manner, and
- analysis of the images of the panels (2) through the image processing means.

2. Method for the automatized inspection of photovoltaic solar collectors installed in plants according to claim 1, **characterized in that** the step of analysis of the images of the panels (2) through the image processing means, comprises, in turn, the following sub-steps
- rotation, scaling and perspective correction of each panel image (2) by means of geometric transformations to place them in the same arrangement as the standard images to which they will be compared,
- large-scale texture analysis of the panel (2), and
- division of the panel (2) into
- the main body (3) with a regular geometry in the shape of a matrix of identical photovoltaic cells (4) arranged on the backsheet (5),
- and periphery of the panel (6).

3. Method for the automatized inspection of photovoltaic solar collectors installed in plants according to the previous claim, **characterized in that**, in addition, it comprises the step of analysis of the main body (3) through the image processing means, which, in turn, comprises the sub-steps of
- division of the main body (3) into each one of the photovoltaic cells (4), and
- individualized analysis of each one of the photovoltaic cells (4) through a visual irregularity analysis, and
- color analysis of the cell (4) and the backsheet (5), for the detection of burns and other defects.

4. Method for the automatized inspection of photovoltaic solar collectors installed in plants according to any one of the claims 2 to 3, **characterized in that** it comprises an additional step of visual analysis of the peripheral interconnectors (7) and a color analysis of the peripheral backsheet (5), for the detection of burns and other defects.

5. Method for the automatized inspection of photovoltaic solar collectors installed in plants according to any one of the previous claims 3 to 4, **characterized in that** in the sub-step of the individualized analysis of each one of the photovoltaic cells (4), a texture analysis of the cell (4) and its components is carried out.

6. Method for the automatized inspection of photovoltaic solar collectors installed in plants according to any one of the previous claims, **characterized in that** the step of analysis of the images of collectors (1) obtained through image processing means, comprises an additional sub-step of composing a panoramic image of the collector (1) in the case different parts of a collector (1) have been taken in different images, wherein an image of the collector (1) in its entirety is recomposed based on said different images.

7. Method for the automatized inspection of photovoltaic solar collectors installed in plants according to any one of the previous claims, **characterized in that** in the step of setting the capture conditions and the parameters to obtain the images of the collectors (1), the conditions are set among spectrum range, illumination conditions, orientation, resolution, optics, optical filters, relative position and orientation between the collector and the camera, number of cameras used, number of images taken by collector (1) and panel (2) and any combination thereof.

8. Method for the automatized inspection of photovoltaic solar collectors installed in plants according to the previous claim, **characterized in that** the range of the electromagnetic spectrum set covers at least part of the infrared spectrum, thus obtaining thermographic images.

9. Method for the automatized inspection of photovoltaic solar collectors installed in plants according to any one of the previous claims, **characterized in that** the treatment of the images is selected between the color treatment of images, the treatment of images converted temporarily to a grey scale, and a combination of both.

10. Method for the automatized inspection of photovoltaic solar collectors installed in plants according to any one of the previous claims, **characterized in that** the location in the image of the collector (1) to be inspected and the segmentation of its image comprise, in turn
- a first binarization of the image with a single threshold obtained from a internal region of the matrix of panels (2) representing the light and dark tones of the interior of the collector (1),
- elimination of small discontinuities of the interior of the panels caused by the busbars (12) of the cells (4),
- labeling of the image, wherein each region of the image that is not connected to any other region as an individual region is truly separated, which allows differentiating each panel (2) from the others and treat it individually,
- filling of the holes corresponding to the backsheet (5) of each one of the panels (2), which provides a compaction of the interior of said panels (2),
- new labeling and filtering that eliminate all the regions that do not correspond to the expected appearance of the panels (2) according to area, rectangularity and other criteria.

11. Method for the automatized inspection of photovoltaic solar collectors installed in plants according to the previous claim, **characterized in that** after the sub-step of segmentation of the image of the collector (1) into differentiated panels (2), it comprises a final segmentation of each one of the panels (2), which comprises, in turn
- an additional binarization of each one of the differentiated panels (2) obtained after the segmentation, with a threshold obtained from an enlarged region of the region labeled during the previous segmentation process, assuming that said enlarged region will contain the panel (2) in its entirety and will represent the light and dark tones of said panel (2),
- the elimination of discontinuities of the interior of the panel (2),
- the filling of the holes existing in the panel (2),
- the new filtering according to area, rectangularity and other criteria.

12. Method for the automatized inspection of photovoltaic solar collectors installed in plants according to any one of the claims 2 to 11, **characterized in that** the sub-step of rotation, scaling and perspective correction of each panel image (2) comprises, in turn
- the segmentation of the contour of the panel (2) into four segments (8), which form a trapezoid (9) corresponding to the main body of the panel (2),
- homography transformation of the vertexes of the trapezoid (9) and all of its points, which comprises rotation, translation and scaling, and turns said trapezoid (9) into a rectangle (10) aligned with the axes of the image, making it comparable to the standard panel images.

13. Method for the automatized inspection of photovoltaic solar collectors installed in plants according to any one of the claims 3 to 12, **characterized in that** in the sub-step of the division of the main body (3) into each one of the photovoltaic cells (4), the exact location in the panel (2) of said cells (4) is carried out by means of template matching, wherein an algorithm generates a model that locates objects in the image that are similar to a template image of the cell (4).

14. Method for the automatized inspection of photovoltaic solar collectors installed in plants according to any one of the claims 3 to 13, **characterized in that** prior to the individualized analysis of each one of the photovoltaic cells (4), the image of said cell (4) is smoothed by means of averaging in the vicinity of each pixel forming the image, so the appearance of the cell is as uniform as possible.

15. Method for the automatized inspection of photovoltaic solar collectors installed in plants according to any one of the claims 3 to 14, **characterized in that**
- the individualized analysis of each one of the photovoltaic cells (4), comprises, in turn, a variation model using
- an average image of prototype images considered correct, and
- a tolerance image of the deviation permitted regarding the average image,
- and because the cells (4) are compared with the images of the variation model, the differences in intensity with respect to said images are marked in these cells (4).

16. Method for the automatized inspection of photovoltaic solar collectors installed in plants according to the previous claim, **characterized in that**
- in addition, a dynamic thresholding is carried out, wherein each one of the pixels of the image of the cell (4) is compared to the average or median of a neighboring environment thereof, and if the difference in intensity is higher than a pre-established value, it is considered irregular,
- and because the busbars (12) and the spaces between cells (4), belonging to the backsheet (5), are excluded from said dynamic thresholding.

17. Method for the automatized inspection of photovoltaic solar collectors installed in plants according to any one of the claims 3 to 16, **characterized in that** the step of analysis of the main body (3) through the image processing means additionally comprises a sub-step of analysis of the color of the cell (4) and the backsheet (5) for the detection of burns and other defects.
